# EUROPÄISCHE PATENTANMELDUNG

(11) **EP 0 959 632 A1**
(43) Veröffentlichungstag der Anmeldung: **24.11.1999**
(21) Anmeldenummer: 99810415.2
(22) Anmeldetag: 10.05.1999
(51) Int. Cl.: H04Q 7/08

(54) **Roaming-Verfahren und Inhaus-Personenrufsystem für ERMES-Personenrufempfänger**

(30) Priorität: 22.05.1998 WO PCT/CH98/00216
(71) Anmelder: Swisscom AG, 3050 Bern (CH)
(72) Erfinder: Stadelmann, Roland, 3043 Uettligen (CH)
(74) Vertreter: BOVARD AG - Patentanwälte

(57) **Zusammenfassung**

Roaming-Verfahren und Inhaus-Personenrufsystem für ERMES-Personenrufempfänger (2, 2'), die sich zwischen mindestens einem Inhaus-Personenrufnetz und mindestens einem das geografische Gebiet des genannten Inhaus-Personenrufnetz umfassenden öffentlichen ERMES-Personenrufnetz bewegen können. Wobei mindestens gewisse der genannten ERMES-Personenrufempfänger (2, 2') in der öffentlichen ERMES-Personenrufvermittlungszentrale (PNC) und in der Inhaus-Personenrufzentrale (1) registriert werden. Wobei Personenrufmeldungen vom Inhaus-Personenrufnetz mit Call-Diversion Umleitbefehlen an die ERMES-Personenrufvermittlungszentrale (PNC) weitergeleitet werden können und Personenrufmeldungen, vom öffentlichen vermittelten Fernsprechnetz (PSTN) an einen ERMES-Personenrufempfänger (2') im Inhaus-Personenrufnetz, von der ERMES-Personenrufvermittlungszentrale (PNC) an die Inhaus-Personenrufzentrale (1) weitergeleitet werden.

## Beschreibung

Die vorliegende Erfindung betrifft ein Roaming-Verfahren und ein Inhaus-Personenrufsystem für ERMES-Personenrufempfänger, insbesondere betrifft sie ein Roaming-Verfahren und ein Inhaus-Personenrufsystem für ERMES-Personenrufempfänger, die sich zwischen mindestens einem Inhaus-Personenrufnetz und mindestens einem das geografische Gebiet des genannten Inhaus-Personenrufnetz umfassenden öffentlichen ERMES-Personenrufnetz bewegen können.

Ein siebenteiliger European Telecommunication Standard (ETS) 300 133 betreffend das European Radio Message System (ERMES) ist beim European Telecommunications Standards Institute, ETSI Secretariat, 06921 Sophia Antipolis Cedex, in Frankreich erhältlich. Der ERMES Standard wurde entwickelt um einen einheitlichen Standard für Personenrufdienste zu definieren, welcher insbesondere ermöglicht Endgeräte, das heisst Personenrufempfänger, zu harmonisieren und Roamingdienste zwischen öffentlichen Personenrufnetzen von verschiedenen Betreibern zu ermöglichen. Öffentliche ERMES-Personenrufnetze werden in Ländern innerhalb und ausserhalb Europas kommerziell betrieben und zahlreiche Roaming Verträge wurden zwischen Betreibern von ERMES-Personenrufnetzen in verschiedenen Ländern abgeschlossen. Obwohl sich ERMES-Personenrufempfänger auch für Inhausanwendungen verwenden lassen, sind die Inhaus-Personenrufnetze von Firmen immer noch mit traditionellen proprietären Personenrufsystemen aufgebaut, welche verschiedene Protokolle und Frequenzen benutzen und die Vereinheitlichung von Endgeräten und Implementierung von Roamingdiensten äusserst schwierig machen.

Es ist eine Aufgabe dieser Erfindung ein neues und besseres Roaming-Verfahren und Inhaus-Personenrufsystem für ERMES-Personenrufempfänger vorzuschlagen, welche ermöglichen, dass ein ERMES-Personenrufempfänger in einem Inhaus-Personenrufnetz und im öffentlichen ERMES-Personenrufnetz verwendet werden kann, wobei die Aussendung von Inhaus-Personenrufmeldungen auf das Inhaus-Personenrufnetz beschränkt werden kann, wenn sich der betreffende Personenrufempfänger im Inhausbereich befindet.

Gemäss der vorliegenden Erfindung werden diese Ziele insbesondere durch die Elemente des kennzeichnenden Teils der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass mindestens gewisse der genannter ERMES-Personenrufempfänger in der ERMES-Personenrufvermittlungszentrale (Paging Network Controller, PNC) des öffentlichen ERMES-Personenrufnetzes und in einer Personenrufzentrale des Inhaus-Personenrufnetzes registriert werden, dass Personenrufmeldungen vom Inhaus-Personenrufnetz zur Aussendung im öffentlichen ERMES-Personenrufnetz an dessen ERMES-Personenrufvermittlungszentrale weitergeleitet werden, wenn im Inhaus-Personenrufnetz ein den ERMES-Personenrufempfänger betreffenden Call-Diversion Umleitbefehl abgespeichert wurde, und dass Personenrufmeldungen, vom öffentlichen vermittelten Fernsprechnetz (Public Switched Telephone Network, PSTN) an einen ERMES-Personenrufempfänger im Inhaus-Personenrufnetz, von der ERMES-Personenrufvermittlungszentrale des öffentlichen ERMES-Personenrufnetzes zur Aussendung im Inhaus-Personenrufnetz an dessen Personenrufzentrale weitergeleitet werden. Dies hat den Vorteil, dass der gleiche ERMES-Personenrufempfänger im Inhaus-Personenrufnetz und im öffentlichen ERMES-Personenrufnetz verwendet werden kann, wobei Personenrufmeldungen aus dem einen Personenrufnetz an ERMES-Personenrufempfänger im anderen Personenrufnetz weitergeleitet werden können.

Gemäss einer Variante werden mehrere Radio Identity Codes (RIC) in einem ERMES-Personenrufempfänger abgespeichert, mit welchen RlCs der ERMES-Personenrufempfänger in der ERMES-Personenrufvermittlungszentrale und in der genannten Personenrufzentrale registriert werden kann. Dies hat beispielsweise den Vorteil, dass der gleiche Personenrufempfänger für verschiedene Verwendungszwecke separat registriert werden kann, indem der Personenrufempfänger zum Beispiel mit einem speziellen RIC für den privaten Gebrauch registriert wird.

In einer Variante wird der Call-Diversion Umleitbefehl in der Personenrufzentrale des Inhaus-Personenrufnetzes abgespeichert und betroffene Personenrufmeldungen werden von der Personenrufzentrale beispielsweise über eine X.25-, eine V22- oder eine ISDN-Verbindung an die ERMES-Personenrufvermittlungszentrale des öffentlichen ERMES-Personenrufnetzes weitergeleitet.

In einer anderen Variante wird der Call-Diversion Umleitbefehl in einer Hauszentrale (Private Automatic Branch Exchange, PABX) abgespeichert und betroffene Personenrufmeldungen werden von dieser Hauszentrale über das öffentliche vermittelte Fernsprechnetz an die ERMES-Personenrufvermittlungszentrale des öffentlichen ERMES-Personenrufnetzes weitergeleitet.

In einer Variante werden Personenrufmeldungen, vom öffentlichen vermittelten Fernsprechnetz an einen ERMES-Personenrufempfänger im Inhaus-Personenrufnetz, von der ERMES-Personenrufvermittlungszentrale des öffentlichen ERMES-Personenrufnetzes über eine Verbindung, beispielsweise über eine X.25-, eine V22- oder eine ISDN-Verbindung, an die Personenrufzentrale des Inhaus-Personenrufnetzes weitergeleitet. Vorzugsweise greift die Personenrufzentrale über eine ERMES-I5-Zugriffsschnittstelle oder, als Variante, über eine ERMES-14-Schnittstelle auf die Verbindung zu. Der Zugriff über eine ERMES-I5-Zugriffsschnittstelle hat insbesondere den Vorteil, dass sie einfacher und kostengünstiger ist als eine ERMES-14-Schnittstelle.

In einer anderen Variante werden Personenrufmeldungen, vom öffentlichen vermittelten Fernsprechnetz an einen ERMES-Personenrufempfänger im Inhaus-Personenrufnetz, von der ERMES-Personenrufvermittlungszentrale des öffentlichen ERMES-Personenrufnetzes über das öffentliche vermittelte Fernsprechnetz via die genannte Hauszentrale an die Personenrufzentrale des Inhaus-Personenrufnetzes weitergeleitet.

Vorzugsweise synchronisiert sich die Personenrufzentrale des Inhaus-Personenrufnetzes mit der UTC Weltzeit.

Die Personenrufzentrale des Inhaus-Personenrufnetzes kann die Personenrufmeldungen über eine ERMES-12-Schnittstelle an einen Mastersender weiterleiten. Die Einhaltung der ERMES-12-Schnittstelle ist selbst in einem ERMES-konformen Personenrufnetz nicht vorgeschrieben und die Schnittstelle kann von einem Fachmann auch anders implementiert werden.

Vorzugsweise bereitet der Mastersender Personenrufmeldungen entsprechend der ERMES-I1-Luftschnittstelle als Radiofrequenzsignal auf.

Vorzugsweise sendet der Mastersender das aufbereitete Radiofrequenzsignal auf einem ERMES-Kanal, der mit dem genannten öffentlichen ERMES-Personenrufnetz synchronisiert ist und der von keinem öffentlichen ERMES-Personenrufnetzbetreiber im das Inhaus-Personenrufnetz umfassende geografischen Gebiet verwendet wird. Dies hat den Vorteil, dass sich ein ERMES-Personenrufempfänger im Inhausbereich mittels seines Kanal-Scanners auf diesen Kanal einstellen kann, und sobald das Inhaus-Personenrufnetz verlassen wird, und beispielsweise die Feldstärke auf diesem Kanal schwach wird, sich auf Kanäle des öffentlichen ERMES-Personenrufnetzes einstellen kann. Zudem kann das Inhaus-Personenrufnetz kostengünstiger gestaltet werden, da es nur auf diesen einen Kanal ausgelegt zu werden braucht.

Vorzugsweise leitet der genannte Mastersender das aufbereitete Radiofrequenzsignal mittels Optokoppler und Glasfaserverbindung an mindestens einen Slavesender weiter, welcher das Signal mittels einem Optik/Radiofrequenz-Konverter empfängt und in das Radiofrequenzsignal zurückkonvertiert, dieses verstärkt und aussendet. Dies hat den Vorteil, dass die kurzen Laufzeitunterschiede über die Glasfaserverbindung eine einfache Synchronisation der Slavesender ermöglichen und damit Inhaus-Personenrufnetze flächendeckend und kostengünstig aufgebaut werden können.

Vorzugsweise wird in mindestens gewissen ERMES-Personenrufempfänger eine Frequency Subset Number abgespeichert, die für das genannte Inhaus-Personenrufnetz vorgesehen ist, so dass sich ein genannter Personenrufempfänger auf den im genannten Inhaus-Personenrufnetz verwendeten genannten ERMES-Kanal einstellen kann.

Vorzugsweise verfügt über die Personenrufzentrale des Inhaus-Personenrufnetzes über eine Schnittstelle, mit welcher sie an eine Hauszentrale angeschlossen werden kann.

Vorzugsweise umfasst die Personenrufzentrale des Inhaus-Personenrufnetzes Funktionen der ERMES-Personenrufvermittlungszentrale, der ERMES-Personenrufbereichssteuerung (Paging Area Controller, PAC), der internen ERMES-13- und ERMES-12-Schnittstellen, und Funktionen für die Teilnehmerverwaltung und die Operations and Maintenance Centre (OMC) Schnittstelle. Vorteilhafterweise kann dies so implementiert werden, dass die in der Personenrufzentrale integrierten Funktionenen beschränkt werden, indem beispielsweise interne Schnittstellen oder aufwendige Funktionen, zum Beispiel Personenrufnetz-Interoperationsdienste, welche auf dem Siebenschichten-Modell für die Integration von offenen Systemen (Open Systems Integration, OSI) der ISO (International Standards Organisation) basieren, vereinfacht werden.

Nachfolgend wird eine Ausführung der vorliegenden Erfindung anhand eines Beispieles beschrieben. Das Beispiel der Ausführung wird durch folgende beigelegte Figuren illustriert:

Fig. 1 zeigt ein Blockdiagramm mit einem öffentlichen ERMES-Personenrufnetz, welches mit dem öffentlichen vermittelten Fernsprechnetz verbunden ist, und ein Inhaus-Personenrufnetz, welches ein Inhaus-Personenrufsystem mit einem Mastersender, Slavesender, und einer Personenrufzentrale umfasst, die an eine Hauszentrale angeschlossen ist, welche mit einem Privatnetz und dem öffentlichen vermittelten Fernsprechnetz verbunden ist.

Fig. 2 zeigt den schematischen Aufbau eines Radio Identity Codes (RIC) bestehend aus Betreiberidentifikation (Operator Identity) und Lokaladresse.

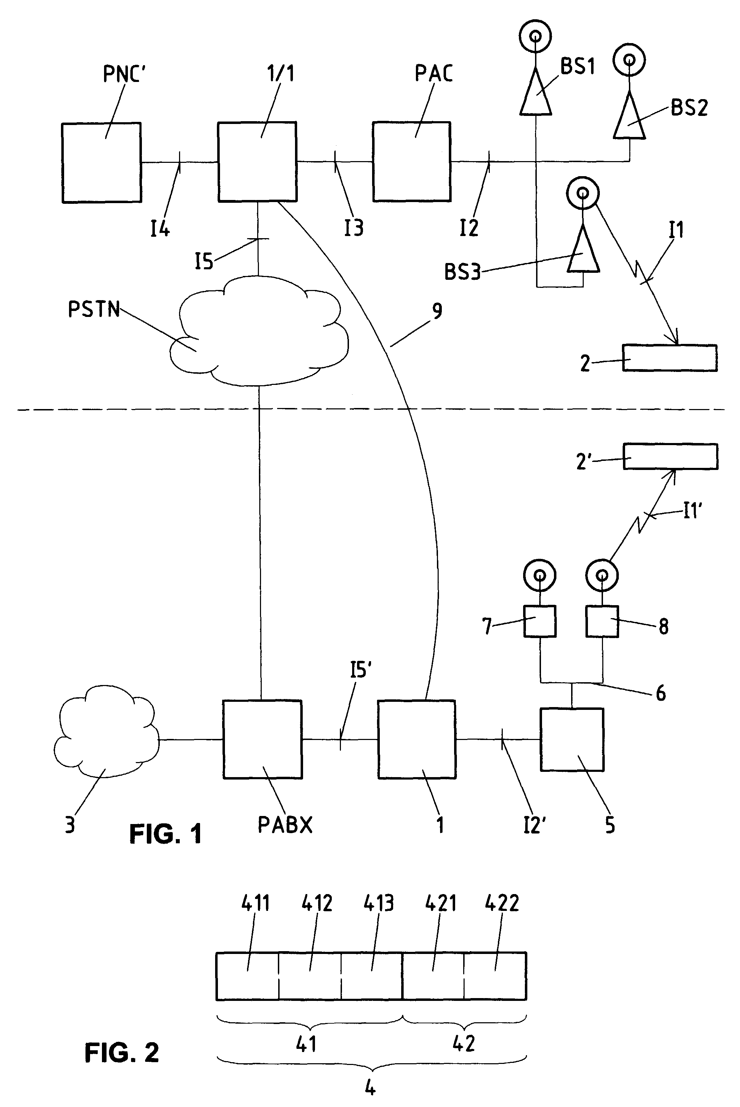

Zum besseren Verständnis sei zuerst erwähnt, dass der öffentliche Bereich mit dem öffentlichen vermittelten Fernsprechnetz PSTN und dem öffentlichen ERMES-Personenrufnetz im durch die gestrichelte Linie abgetrennten oberen Teil der Fig. 1 dargestellt ist. Als nächstes sei hier eine grobe Übersicht der ERMES Systemarchitektur gegeben. Die Referenzzeichen PNC und PNC' beziehen sich auf standardmässige ERMES-Personenrufvermittlungszentralen (Paging Network Controller, PNC), welche über eine ERMES-I4-Schnittstelle I4 miteinander verbunden sind. Die ERMES-I4-Schnittstelle I4 beinhaltet Personenrufnetz-lnteroperationsdienste, welche auf dem Siebenschichten-Modell für die Integration von offenen Systemen (Open Systems Integration, OSI) der ISO (International Standards Organisation) basieren.

Wie in Fig. 1 dargestellt, ist die ERMES-Personenrufvermittlungszentrale PNC über eine ERMES-I5-Zugriffsschnittstelle mit dem öffentlichen vermittelten Fernsprechnetz PSTN verbunden. Neben den oben genannten Interoperationsdiensten ist die ERMES-Personenrufvermittlungszentrale PNC auch für die Annahme und Behandlung von Personenrufmeldungen sowie für Netzwerk-Managementdienste und Funktionen für die Teilnehmerverwaltung und die Operations and Maintenance Centre (OMC) Schnittstelle verantwortlich. Typischerweise gelangen die Personenrufmeldungen vom öffentlichen vermittelten Fernsprechnetz PSTN über die ERMES-I5-Zugriffsschnittstelle I5 zu der ERMES-Personenrufvermittlungszentrale PNC. Unter der Annahme, dass die betreffenden Personenrufmeldungen nicht über die ERMES-I4-Schnittstelle I4 an eine andere ERMES-Personenrufvermittlungszentrale PNC' weitergeleitet werden müssen, werden sie über eine ERMES-I3-Schnittstelle I3 an die ERMES-Personenrufbereichssteuerung (Paging Area Controller, PAC) PAC weitergeleitet.

Die Personenrufbereichssteuerung PAC überwacht die ERMES-Basisstationen BS1, BS2, BS3 betreffend deren Alarmmeldungen und regelt den von der ERMES-Personenrufvermittlungszentrale PNC empfangenen Rufverkehr für das Gebiet unter seiner Kontrolle. Die Rufmeldungen werden über die ERMES-I2-Schnittstelle I2 an die ERMES-Basisstationen BS1, BS2, BS3 weitergeleitet. Die Personenrufbereichssteuerung PAC unterstützt auch OMC Funktionen.

Die ERMES-Basisstationen BS1, BS2, BS3 bestehen aus einem oder mehreren Sendern, mittels welchen sie die Personenrufmeldungen über die ERMES-I1-Luftschnittstelle I1 aussenden. Um Bit-Interferenz zu vermeiden sind angrenzende ERMES-Basisstationen BS1, BS2, BS3 innerhalb zehn Mikrosekunden miteinander synchronisiert. Zudem leiten die ERMES-Basisstationen BS1, BS2, BS3 Alarmmeldungen über die ERMES-I2-Schnittstelle I2 an die Personenrufbereichssteuerung PAC und sie unterstützen Funktionen für die OMC-Schnittstelle.

Im ERMES System stehen sechzehn Kanäle in einem 25-KHz Raster zur Verfügung und es können Frequenzmultiplex, Zeitmultiplex, oder Funknetze mit gemischter Anwendung unterstützt werden.

In ERMES wird ein Personenrufempfänger 2, 2' mittels einem in Fig. 2 dargestellten Radio Identity Code (RIC) 4 identifiziert. Ein RIC besteht aus einer Betreiberidentifikation (Operator Identity) 41 und einer Lokaladresse 42, wobei die Betreiberidentifikation 41 aus einem Zonencode 411, einem Ländercode 412, und einem Betreibercode 413 besteht und die Lokaladresse 42 aus einer Initialadresse 421 und einer Blocknummer (Batch Number) 422 besteht. Falls ein Personenrufempfänger 2, 2' mehrere RICs hat, sollen diese alle die selbe Blocknummer 422 haben.

In ERMES sieht das Übertragungsprotokoll eine sechzigminütige Sequenz vor, die mit der Weltzeit UTC synchronisiert ist und sechzig einminütige Zyklen umfasst. Jeder Zyklus besteht aus fünf zwölfsekündigen Untersequenzen, in welcher jeweils sechzehn Blöcke (Batch) übertragen werden. Auf jedem nächsthöheren Kanal wird die Sendezeit eines bestimmten Blockes, mit einer bestimmten Blocknummer, um eine Blocklänge verzögert, so dass ein Personenrufempfänger die Kanäle absuchen kann (scanning), ohne eine Meldung der betreffenden Blocknummer zu verpassen. Neben Adressinformationen und Meldungsinhalt enthält ein Block unter anderem auch die Betreiberidentifikation 41, eine Personenrufbereichsnummer und einen Frequency Subset Indicator.

In Fig. 1 bezeichnet die Bezugsziffer 3 ein Privatnetz welches mit einer Hauszentrale (Private Automatic Branch Exchange, PABX) PABX verbunden ist, die auch ans öffentliche vermittelte Fernsprechnetz (Public Switched Telephone Network, PSTN) PSTN angeschlossen ist. Eine mit einem Endgerät des Privatnetzes 3, beispielsweise ein Telefon oder ein mittels einem Modem verbundenen Computer, aufgegebene Personenrufmeldung an einen Personenrufempfänger 2' im Inhaus-Personenrufnetz wird von der Hauszentrale PABX beispielsweise über eine ERMES-I5-Zugriffsschnittstelle I5' an die Personenrufzentrale 1 übermittelt. Personenrufmeldung für externe Personenrufempfänger, die nicht zum Inhaus-Personenrufnetz gehören, können von Benutzern im Privatnetz 3 über die Hauszentrale PABX angewählt werden, indem, wie üblich bei privaten Hauszentralen PABX, beispielsweise eine Ziffer, z. B. eine Neun oder eine Null, zur Anwahl eines externen Endgerätes vorgewählt wird.

In einer Variante wird die Hauszentrale PABX so erweitert, dass ein Call-Diversion Umleitbefehl für einen Personenrufempfänger 2, der sich üblicherweise im Inhaus-Personenrufnetz befindet, dessen Personenrufmeldungen aber zeitweilig nicht ins Inhaus-Personenrufnetz sondern ins öffentliche ERMES-Personenrufnetz umgeleitet werden sollen, eingegeben und abgespeichert werden kann. Dies kann beispielsweise so ausgeführt werden, dass entsprechende Befehle über die Tastatur eines Endgerätes, z. B. ein Telefon, eingegeben und von einem entsprechenden Programm in der Hauszentrale PABX entgegengenommen und in dafür vorgesehenen Tabellen abgespeichert werden. Offensichtlich wird eine ähnliche Funktion zum Zurücksetzen des Call-Diversion Umleitbefehls entsprechend implementiert. Ein Benutzer kann seinen Personenrufempfänger 2, für den die Personenrufmeldungen umgeleitet werden sollen, bei der Eingabe des Diversion Umleitbefehls beispielsweise mittels dessen Seriennummer oder Rufnummer identifizieren. Falls der Call-Diversion Umleitbefehl für den betreffenden Personenrufempfänger 2 gesetzt wurde, leitet die Hauszentrale PABX gemäss dieser Variante die Personenrufmeldung mittels entsprechend implementierten Programmfunktionen über das öffentliche vermittelte Fernsprechnetz PSTN an die ERMES-Personenrufvermittlungszentrale PNC des öffentlichen ERMES-Personenrufnetzes. Falls zur Umleitung mehrere ERMES-Personenrufnetze in Frage kommen, kann der Call-Diversion Umleitbefehl so erweitert werden, dass auch das Zielnetz angegeben werden kann, normalerweise werden allerdings Personenrufmeldungen, wie oben erwähnt, von der öffentlichen ERMES-Personenrufvermittlungszentrale PNC mittels der Personenrufnetz-lnteroperationsdienste über eine ERMES-I4-Schnittstelle I4 an eine anderes Personenrufnetz weitergeleitet. Das weitere Vorgehen in der ERMES-Personenrufvermittlungszentrale PNC wird später beschrieben werden.

In einer anderen Variante wird die Personenrufzentrale 1 so erweitert, dass der oben beschriebene Call-Diversion Umleitbefehl für einen Personenrufempfänger 2, dessen Personenrufmeldungen ins öffentliche ERMES-Personenrufnetz umgeleitet werden sollen, eingegeben und abgespeichert werden kann. Das als Beispiel oben beschriebene Programm zur Entgegennahme, Abspeicherung und Zurücksetzung von Call-Diversion Umleitbefehlen kann entsprechend in der Personenrufzentrale 1 implementiert werden. Falls der Call-Diversion Umleitbefehl für den betreffenden Personenrufempfänger 2 gesetzt wurde, leitet die Personenrufzentrale 1 gemäss dieser Variante die Personenrufmeldung mittels entsprechend implementierten Programmfunktionen über eine Verbindung 9 an die ERMES-Personenrufvermittlungszentrale PNC des öffentlichen ERMES-Personenrufnetzes. Die Verbindung kann eine standardmässige X.25-, V22- oder ISDN-Verbindung sein, auf welche die Personenrufzentrale 1 über eine ERMES-I5- oder eine ERMES-I4-Schnittstelle zugreifen kann. Allerdings ist eine ERMES-I4-Schnittstelle sehr aufwendig, so dass vorteilhafterweise eine einfachere ERMES-I5-Schnittstelle oder eine andere geeignete Schnittstelle verwendet wird. Für die entsprechende Schnittstelle in der ERMES-Personenrufvermittlungszentrale PNC wird dort zum Beispiel ein zusätzlicher Port eingeführt oder ein CIC (Communication Interface Computer) vorgeschaltet. Typischerweise reicht eine Verbindung zu einer ERMES-Personenrufvermittlungszentrale PNC aus da, wie oben erwähnt, die ERMES-Personenrufvermittlungszentrale PNC mittels der Personenrufnetz-lnteroperationsdienste die Personenrufmeldungen über eine ERMES-I4-Schnittstelle I4 an andere Personenrufnetze weiterleiten kann. Aufwendige Personenrufnetz-Interoperationsdienste brauchen also in der Personenrufzentrale 1 nicht implementiert zu werden.

Es kann auch vorgesehen sein, dass Personenrufmeldungen zusätzlich zur Weiterleitung an die ERMES-Personenrufvermittlungszentrale PNC des öffentlichen ERMES-Personenrufnetzes auch ins Inhaus-Personenrufnetz weitergeleitet werden, obwohl ein betreffender Call-Diversion Umleitbefehl gesetzt wurde. Dies entspricht einem Dauer-Roaming und hat den Vorteil, dass Personenrufmeldungen nicht verpasst werden, wenn vergessen wurde einen Call-Diversion Umleitbefehl zurückzusetzen.

ERMES-Personenrufempfänger 2, 2', die sich zwischen Inhaus-Personenrufnetz und dem öffentlichen ERMES-Personenrufnetz bewegen können, werden vorzugsweise sowohl in der Personenrufzentrale 1 des Inhaus-Personenrufnetzes und in der ERMES-Personenrufvermittlungszentrale PNC des öffentlichen ERMES-Personenrufnetzes beispielsweise mit deren RlCs registriert. Beispielsweise kann ein ERMES-Personenrufempfänger 2, 2' mit einem RIC versehen werden, welcher in der Personenrufzentrale 1 und in der ERMES-Personenrufvermittlungszentrale PNC in dafür vorgesehenen Tabellen abgespeichert wird. Personenrufmeldungen an einen solchen ERMES-Personenrufempfänger 2, 2' mit einem RIC, die an die ERMES-Personenrufvermittlungszentrale PNC gelangen, können von dieser, beispielsweise mit Dauer-Roaming, über das öffentliche ERMES-Personenrufnetz und via der oben beschriebenen Verbindung 9, oder via des öffentlichen vermittelten Fernsprechnetzes PSTN, über die Personenrufzentrale 1 ins Inhaus-Personenrufnetz weitergeleitet werden.

Ein ERMES-Personenrufempfänger 2, 2' kann aber auch mit mehreren RlCs versehen werden, welche in dafür vorgesehenen Tabellen in der ERMES-Personenrufvermittlungszentrale PNC und mindestens einer davon in der Personenrufzentrale 1 abgespeichert werden. Personenrufmeldungen an einen solchen ERMES-Personenrufempfänger 2, 2' mit mehreren RlCs, die an die ERMES-Personenrufvermittlungszentrale PNC gelangen, können von dieser je nach angewähltem RIC unterschiedlich behandelt werden. Beispielsweise kann ein erster RIC für das Inhaus-Personenrufnetz vorgesehen werden, so dass die ERMES-Personenrufvermittlungszentrale PNC entsprechende Personenrufmeldungen an einen Personenrufempfänger 2, 2' mit diesem ersten RIC, wie oben beschrieben, an das öffentliche ERMES-Personenrufnetz und ins Inhaus-Personenrufnetz weiterleitet. Ein zweiter RIC kann beispielsweise nur für das öffentliche ERMES-Personenrufnetz vorgesehen sein, z. B. für privaten Gebrauch des ERMES-Personenrufempfängers 2, so dass die ERMES-Personenrufvermittlungszentrale PNC entsprechende Personenrufmeldungen nur an das öffentliche ERMES-Personenrufnetz weiterleitet.

Zusätzliche Programmfunktionen zur speziellen Behandlung von Personenrufmeldungen, die von der Personenrufzentrale 1 auf Grund eines Call-Diversion Umleitbefehls über die Verbindung 9 an die ERMES-Personenrufvermittlungszentrale PNC umgeleitet werden, können in der Personenrufzentrale 1 oder in der ERMES-Personenrufvermittlungszentrale PNC vorgesehen werden. Beispielsweise kann die ERMES-Personenrufvermittlungszentrale PNC so erweitert werden, dass sie solche Personenrufmeldungen nicht wieder an die Personenrufzentrale 1 weiterleitet, obwohl dies gemäss einem Dauer-Roaming vorgesehen wäre. Änderungen der ERMES-Personenrufvermittlungszentrale PNC können vermieden werden, wenn die Personenrufzentrale 1 so erweitert wird, dass sie Personenrufmeldungen, die zur Weiterleitung von der ERMES-Personenrufvermittlungszentrale PNC erhalten wurden, nicht weiterleitet oder umleitet wenn ein entsprechender Call-Diversion Umleitbefehl gesetzt wurde. Entsprechende Anpassungen können auch in der Hauszentrale PABX vorgenommen werden, falls die Call-Diversion Umleitbefehle dort gesetzt werden und die Personenrufmeldungen von der ERMES-Personenrufvermittlungszentrale PNC über das öffentliche vermittelte Fernsprechnetz PSTN in die Hauszentrale PABX gelangen.

In der Personenrufzentrale 1 des Inhaus-Personenrufnetzes sind zumindest gewisse Funktionen wie sie gemäss ERMES für eine Personenrufvermittlungszentrale (PNC), eine Personenrufbereichssteuerung (PAC), sowie für eine I3- und I2-Schnittstelle spezifiziert sind, beispielsweise auf einem gemeinsamen Computer, z. B. ein Personal Computer, zusammengefasst und als Programmfunktionen implementiert. Wie oben erwähnt wurde brauchen die aufwendigen Personenrufnetz-Interoperationsdienste, sowie die vollen Netzwerk-Managementdienste in der Personenrufzentrale 1 nicht implementiert zu werden und insbesondere die internen Schnittstellen können vereinfacht werden. Zudem können auch die Funktionen für die OMC-Schnittstelle und insbesondere für die Teilnehmerverwaltung vereinfacht und auf die Bedürfnisse der wesentlich kleineren Inhaus-Personenrufnetze angepasst werden. Es ist durchaus denkbar, dass verschiedene Versionen der Personenrufzentrale 1 mit unterschiedlichem Angebot an Funktionen implementiert und angeboten werden können. Vereinfachungen sind auch hinsichtlich der Funktionalität der Personenrufbereichssteuerung PAC möglich, da jeweils nur ein Mastersender 5 überwacht werden muss, wie unten beschrieben wird.

Wenn kein Call-Diversion Umleitbefehl gesetzt wurde, können Personenrufmeldungen von der Personenrufzentrale 1 des Inhaus-Personenrufnetzes über eine ERMES-I2-Schnittstelle I2' an einen Mastersender 5 weitergeleitet werden. Gemäss dem ERMES Standard ist die Einhaltung der Spezifikationen für die bidirektionale ERMES-I2-Schnittstelle selbst in einem ERMES-konformen Personenrufnetz nicht vorgeschrieben, so dass der Fachmann die Schnittstelle zwischen der Personenrufbereichssteuerung PAC und der Basisstation BS1, BS2, BS3 anders implementieren kann. Auch in der vorliegenden Erfindung kann ein Fachmann Vereinfachungen dieser Schnittstelle vornehmen, solange gewährt werden kann, dass der Personenrufverkehr und die Alarmmeldungen zwischen der Personenrufzentrale 1 und dem Mastersender 5 übermittelt werden können.

Um das Inhaus-Personenrufnetz mit den öffentlichen ERMES-Personenrufnetzen zu synchronisieren, synchronisiert sich die Personenrufzentrale 1 mit der Weltzeit UTC, beispielsweise mittels entsprechenden Programmfunktionen, die auf das Global Positioning System GPS zugreifen. Damit wird auch erreicht, dass die oben beschriebene sechzigminütige Sequenz, sowie deren sechzig einminütige Zyklen mit der Weltzeit UTC synchronisiert werden können.

Der Mastersender 5 bereitet die erhaltenen Personenrufmeldungen entsprechend der ERMES-I1-Luftschnittstelle als Radiofrequenzsignal auf und zwar wird dies von einem Fachmann vorzugsweise so implementiert, dass ein ERMES-Kanal benutzt wird, der von keinem öffentlichen ERMES-Personenrufnetzbetreiber im geografischen Gebiet verwendet wird, das vom Inhaus-Personenrufnetz umfasst wird. Dies hat den Vorteil, dass sich ein ERMES-Personenrufempfänger 2' im Inhausbereich mittels seines Kanal-Scanners auf diesen Kanal einstellen kann, und sobald das Inhaus-Personenrufnetz verlassen wird, und beispielsweise die Feldstärke auf diesem Kanal schwach wird, sich auf Kanäle des öffentlichen ERMES-Personenrufnetzes einstellen kann. Zudem kann das Inhaus-Personenrufnetz kostengünstiger gestaltet werden, da es nur auf diesen einen Kanal ausgelegt zu werden braucht. In einer Variante strahlt der Mastersender 5 das aufbereitete Radiofrequenzsignal auch über eine Antenne ab. Als Sendeleistung wird eine auf kleine Leistung von beispielsweise 100 bis 200mW verwendet, natürlich kommt je nach Gebäude auch eine höhere Leistung von beispielsweise ungefähr 1W in Frage.

Um eine flächendeckendes Inhaus-Personenrufnetz zu erhalten, leitet der Mastersender 5 das aufbereitete Radiofrequenzsignal mittels Optokoppler und Glasfaserverbindung 6 an mindestens einen Slavesender 7, 8 weiter, welcher das Signal mittels einem Optik/Radiofrequenz-Konverter empfängt und in das Radiofrequenzsignal zurückkonvertiert, dieses verstärkt und aussendet. Dieser Optik/Radiofrequenz-Konverter kann kanalselektiv auf den im Inhaus-Personenrufnetz verwendeten Kanal ausgelegt sein. So kann eine Personenrufmeldung beispielsweise vom Slavesender 8 über eine Luftschnittstelle I1' an einen ERMES-Personenrufempfänger 2' im Inhaus-Personenrufnetz übermittelt werden. Die verwendeten Optokoppler, Glasfaserverbindungen 6, Optik/Radiofrequenz-Konverter und Verstärker, die beispielsweise auch für die Verbreitung von Radiofrequenzsignalen in langen Strassentunnels bekannt sind, können von einem Fachmann konfiguriert werden. Die Verbreitung über eine solche Glasfaserverbindung 6 hat den Vorteil, dass die kurzen Laufzeitunterschiede über die Glasfaserverbindung 6 eine einfache Synchronisation der Slavesender 7, 8 ermöglichen und damit kostengünstig flächendeckende Inhaus-Personenrufnetze aufgebaut werden können. Als Sendeleistung für die Slavesender 7, 8 können Leistungen, wie sie für den Mastersender 5 oben beschrieben worden sind, verwendet werden. Als mögliche Abstrahlelemente für die Slavesender 7, 8, oder gegebenenfalls auch für den Mastersender 5, können zum Beispiel Flach- oder λ/4-Antennen oder auch Abstrahlungskabel verwendet werden.

ERMES-Personenrufempfänger 2, 2' für das Inhaus-Personenrufnetz können so konfiguriert sein, dass sie sämtliche ERMES-Kanäle absuchen können (scanning), und dass sie eine Frequency Subset Number abgespeichert haben, die speziell für das Inhaus-Personenrufnetz vorgesehen ist. Wenn ein derart konfigurierter ERMES-Personenrufempfänger 2' im Kanalsuchmodus (scanning mode) ist, beispielsweise weil der Personenrufempfänger 2' manuell aus-/eingeschaltet wurde, findet er im geografischen Gebiet des Inhaus-Personenrufnetzes den für das Inhaus-Personenrufnetz vorgesehenen ERMES-Kanal, indem er die abgespeicherte Frequency Subset Number mit dem Frequency Subset Indicator vergleicht, der wie oben beschrieben in jedem Block übermittelt wird, und sich, falls diese übereinstimmen, auf diesen Kanal einstellt.

Falls der ERMES-Personenrufempfänger 2 das geografische Gebiet des Inhaus-Personenrufnetzes verlässt, wird der Empfang des für das Inhaus-Personenrufnetz bestimmten ERMES-Kanal wegen der sinkenden Feldstärke immer schwächer, bis der ERMES-Personenrufempfänger 2 beginnt die ERMES-Kanäle abzusuchen und einen Kanal des öffentlichen ERMES- Personenrufnetzes findet und sich auf diesen einstellt. Für diesen Zweck wird die Bedingung gestellt, dass die im Meldungsblock übermittelte Betreiberidentifikation 41 mit derjenigen in dem (oder in den) abgespeicherten RIC 4 übereinstimmt.

An dieser Stelle sollte auch erwähnt werden, dass sich das beschriebene Verfahren und Inhaus-Personenrufsystem für sämtliche ERMES Meldungskategorien und neben Einzelmeldungen auch für Gruppenmeldungen eignet. Für letztere muss allerdings erwähnt werden, dass die beschriebenen Programme für die Hauszentrale PABX, respektive für die Personenrufzentrale 1 so erweitert werden müssen, dass sie Gruppenmeldungen an das Inhaus-Personenrufnetz weiterleiten, auch wenn ein Call-Diversion Umleitbefehl gesetzt wurde, solange nicht alle Personenrufempfänger 2, 2' der betreffenden Gruppe einen Call-Diversion Umleitbefehl gesetzt haben. Dies erübrigt sich natürlich bei der Variante, in der mittels Dauer-Roaming, in der Personenrufzentrale 1 oder gegebenenfalls in der Hauszentrale PABX, Personenrufmeldungen trotz Call-Diversion Umleitbefehl auch ins Inhaus-Personenrufnetz weitergeleitet werden.

Das beschriebene Verfahren und Inhaus-Personenrufsystem eignet sich besonders, aber nicht ausschliesslich, für mittelgrosse und grosse Firmen, an welche Inhaus-Personenrufsysteme verkauft oder vermietet werden können, und von welchen zudem vom Betreiber des öffentlichen Personenrufnetzes Gebühren für den Anschluss an das öffentliche ERMES-Personenrufnetz erhoben werden können. Das beschriebene Verfahren und Inhaus-Personenrufsystem eignet sich auch für Firmen mit mehreren Niederlassungen, beispielsweise kann der Personenrufverkehr von einer öffentlichen ERMES-Personenrufvermittlungszentrale PNC jeweils an die Inhaus-Personenrufnetze in sämtlichen Niederlassungen der betreffenden Firma weitergeleitet werden und/oder die Personenrufzentralen der Inhaus-Personenrufnetze in den verschiedenen Niederlassungen können beispielsweise miteinander verknüpft werden. Der Vorteil für die Benutzer des beschriebenen Verfahrens und Inhaus-Personenrufsystems liegt darin, dass sie mit einem standardmässigen ERMES-Personenrufempfänger 2, 2' nahtlos Personenrufmeldungen im Inhausbereich und im öffentlichen Bereich empfangen können, und den ERMES-Personenrufempfänger 2, 2' auch für gesonderte private Zwecke verwenden können, wobei der Inhaus-Personenrufverkehr in den meisten Fällen nicht über den Inhausbereich hinaus gesendet werden muss.

## Patentansprüche

1. Roaming Verfahren für Personenrufmeldungen an ERMES-Personenrufempfänger (2, 2'), die sich zwischen mindestens einem Inhaus-Personenrufnetz und mindestens einem das geografische Gebiet des genannten Inhaus-Personenrufnetz umfassenden öffentlichen ERMES-Personenrufnetz bewegen können, dadurch gekennzeichnet,
dass mindestens gewisse der genannten ERMES-Personenrufempfänger (2, 2') in der ERMES-Personenrufvermittlungszentrale (PNC) des genannten öffentlichen ERMES-Personenrufnetzes und in einer Personenrufzentrale (1) des genannten Inhaus-Personenrufnetzes registriert werden,
dass Personenrufmeldungen vom genannten Inhaus-Personenrufnetz an die genannte ERMES-Personenrufvermittlungszentrale (PNC) weitergeleitet werden, wenn ein einen genannten ERMES-Personenrufempfänger (2) betreffenden genannter Call-Diversion Umleitbefehl abgespeichert wurde, und von der genannten ERMES-Personenrufvermittlungszentrale (PNC) zur Aussendung im genannten öffentlichen ERMES-Personenrufnetz weitergeleitet werden, und
dass Personenrufmeldungen, vom öffentlichen vermittelten Fernsprechnetz (PSTN) an einen genannten ERMES-Personenrufempfänger (2') im genannten Inhaus-Personenrufnetz, von der genannten ERMES-Personenrufvermittlungszentrale (PNC) an die genannte Personenrufzentrale (1) weitergeleitet und von dieser zur Aussendung im genannten Inhaus-Personenrufnetz weitergeleitet werden, wenn kein den genannten ERMES-Personenrufempfänger (2') betreffenden genannter Call-Diversion Umleitbefehl abgespeichert wurde.

2. Roaming Verfahren gemäss vorhergehendem Anspruch, dadurch gekennzeichnet, dass mehrere Radio Identity Codes in einem genannten ERMES-Personenrufempfänger (2, 2') abgespeichert werden, mit welchen der genannte ERMES-Personenrufempfänger (2, 2') in der genannten ERMES-Personenrufvermittlungszentrale (PNC) und in der genannten Personenrufzentrale (1) registriert werden kann.

3. Roaming Verfahren gemäss einem der vorhergehenden Ansprüche, dadurch gekennzeichnet, dass der genannte Call-Diversion Umleitbefehl in der genannten Personenrufzentrale (1) abgespeichert wird, und dass betroffene Personenrufmeldungen von der genannten Personenrufzentrale (1) über eine X.25-, eine V22- oder eine ISDN-Verbindung (9) an die genannte ERMES-Personenrufvermittlungszentrale (PNC) weitergeleitet werden.

4. Roaming Verfahren gemäss einem der Ansprüche 1 bis 2, dadurch gekennzeichnet, dass der genannte Call-Diversion Umleitbefehl in einer Hauszentrale (PABX) abgespeichert wird, und dass betroffene Personenrufmeldungen von der genannten Hauszentrale (PABX) über das öffentliche vermittelte Fernsprechnetz (PSTN) an die genannte ERMES-Personenrufvermittlungszentrale (PNC) weitergeleitet werden.

5. Roaming Verfahren gemäss einem der vorhergehenden Ansprüche, dadurch gekennzeichnet, dass Personenrufmeldungen, vom öffentlichen vermittelten Fernsprechnetz (PSTN) an einen genannten ERMES-Personenrufempfänger (2') im genannten Inhaus-Personenrufnetz, von der genannten ERMES-Personenrufvermittlungszentrale (PNC) über eine X.25-, eine V22-oder eine ISDN-Verbindung (9) an die genannte Personenrufzentrale (1) weitergeleitet werden.

6. Roaming Verfahren gemäss einem der Ansprüche 3 oder 5, dadurch gekennzeichnet, dass die genannte Personenrufzentrale (1) über eine ERMES-15-Zugriffsschnittstelle auf die genannte Verbindung (9) zugreift.

7. Roaming Verfahren gemäss einem der Ansprüche 3 oder 5, dadurch gekennzeichnet, dass die genannte Personenrufzentrale (1) über eine ERMES-14-Schnittstelle auf die genannte Verbindung (9) zugreift.

8. Roaming Verfahren gemäss einem der Ansprüche 1 bis 4, dadurch gekennzeichnet, dass Personenrufmeldungen, vom öffentlichen vermittelten Fernsprechnetz (PSTN) an einen genannten ERMES-Personenrufempfänger (2') im genannten Inhaus-Personenrufnetz, von der genannten ERMES-Personenrufvermittlungszentrale (PNC) über das öffentliche vermittelte Fernsprechnetz (PSTN) via der genannten Hauszentrale (PABX) an die genannte Personenrufzentrale (1) weitergeleitet werden.

9. Roaming Verfahren gemäss einem der vorhergehenden Ansprüche, dadurch gekennzeichnet, dass die genannte Personenrufzentrale (1) sich mit der UTC Weltzeit synchronisiert.

10. Roaming Verfahren gemäss einem der vorhergehenden Ansprüche, dadurch gekennzeichnet, dass die genannte Personenrufzentrale (1) Personenrufmeldungen über eine ERMES-I2-Schnittstelle (I2') zur Aussendung im genannten Inhaus-Personenrufnetz an einen Mastersender (5) weiterleitet.

11. Roaming Verfahren gemäss vorhergehendem Anspruch, dadurch gekennzeichnet, dass der genannte Mastersender (5) Personenrufmeldungen entsprechend der ERMES-I1-Luftschnittstelle als Radiofrequenzsignal aufbereitet.

12. Roaming Verfahren gemäss vorhergehendem Anspruch, dadurch gekennzeichnet, dass der genannte Mastersender (5) das genannte aufbereitete Radiofrequenzsignal auf einem ERMES-Kanal sendet, der von keinem öffentlichen ERMES-Personenrufnetzbetreiber im genannten geografischen Gebiet verwendet wird und der mit dem genannten öffentlichen ERMES-Personenrufnetz synchronisiert ist.

13. Roaming Verfahren gemäss einem der Ansprüche 11 bis 12, dadurch gekennzeichnet, dass der genannte Mastersender (5) das genannte aufbereitete Radiofrequenzsignal mittels Optokoppler und Glasfaserverbindung an mindestens einen Slavesender (7, 8) weiterleitet.

14. Roaming Verfahren gemäss vorhergehendem Anspruch, dadurch gekennzeichnet, dass der genannte Slavesender (7, 8) das über die genannte Glasfaserverbindung übertragene Signal mittels einem Optik/Radiofrequenz-Konverter empfängt und in das Radiofrequenzsignal zurückkonvertiert und dieses verstärkt und aussendet.

15. Roaming Verfahren gemäss einem der vorhergehenden Ansprüche, dadurch gekennzeichnet, dass in mindestens gewissen genannten ERMES-Personenrufempfänger (2, 2') eine Frequency Subset Number abgespeichert wird, die für das genannte Inhaus-Personenrufnetz vorgesehen ist, so dass sich ein genannter Personenrufempfänger (2, 2') auf den im genannten Inhaus-Personenrufnetz verwendeten genannten ERMES-Kanal einstellen kann.

16. Inhaus-Personenrufsystem, das Personenrufmeldungen entgegennehmen und mittels Sendemitteln über eine Luftschnittstelle (11') an Personenrufempfänger (2') in einem Inhaus-Personenrufnetz übermitteln kann, dadurch gekennzeichnet, dass es eine Personenrufzentrale (1) umfasst, die über eine Schnittstelle verfügt, mit welcher die genannte Personenrufzentrale (1) an eine Hauszentrale (PABX) angeschlossen werden kann, dass die genannte Personenrufzentrale (1) eine Verbindung mit mindestens einer öffentlichen ERMES-Personenrufvermittlungszentrale (PNC) eines öffentlichen ERMES-Personenrufnetzes erstellen kann, über welche im öffentlichen vermittelten Fernsprechnetz (PSTN) generierte Personenrufmeldungen an das genannte Inhaus-Personenrufnetz übermittelt werden können, und dass die genannten Sendemitteln Personenrufmeldungen über eine ERMES-I1-Luftschnittstelle (I1') an ERMES-Personenrufempfänger (2') senden können.

17. Inhaus-Personenrufsystem gemäss vorhergehendem Anspruch, dadurch gekennzeichnet, dass die genannte Schnittstelle der Personenrufzentrale (1) eine standardmässige ERMES-I5-Zugriffsschnittstelle (I5') ist.

18. Inhaus-Personenrufsystem gemäss einem der Ansprüche 16 oder 17, dadurch gekennzeichnet, dass die genannte Verbindung eine X.25-, eine V22- oder eine ISDN-Verbindung ist.

19. Inhaus-Personenrufsystem gemäss einem der Ansprüche 16 bis 18, dadurch gekennzeichnet, dass die genannte Personenrufzentrale (1) Eingabemittel, Speichermittel und programmierte Mittel umfasst um einen genannten ERMES-Personenrufempfänger (2) betreffenden Call-Diversion Umleitbefehl entgegenzunehmen, abzuspeichern und entsprechend von der Hauszentrale (PABX) erhaltenen, den genannten ERMES-Personenrufempfänger (2) betreffende Personenrufmeldungen über die genannte Verbindung an die genannte mindestens eine öffentliche ERMES-Personenrufvermittlungszentrale (PNC) zu übermitteln.

20. Inhaus-Personenrufsystem gemäss einem der Ansprüche 16 oder 17, dadurch gekennzeichnet, dass die genannte Verbindung über das öffentliche vermittelte Fernsprechnetz (PSTN) und über die genannte Hauszentrale (PABX) realisiert wird.

21. Inhaus-Personenrufsystem gemäss einem der Ansprüche 16 bis 20, dadurch gekennzeichnet, dass die genannten Sendemittel einen Mastersender (5) umfassen, welcher mit der genannten Personenrufzentrale (1) über eine ERMES-I2-Schnittstelle (I2') verbunden ist.

22. Inhaus-Personenrufsystem gemäss vorhergehendem Anspruch, dadurch gekennzeichnet, dass die genannten Sendemittel mindestens einen Slavesender (7, 8) umfassen, welcher mit dem genannten Mastersender (5) mittels Optokoppler und Glasfaserkabel (6) verbunden ist.

23. Inhaus-Personenrufsystem gemäss vorhergehendem Anspruch dadurch gekennzeichnet, dass der genannte mindestens eine Slavesender (7, 8) ein Optik/Radiofrequenz-Konverter ist.

24. Inhaus-Personenrufsystem gemäss einem der Ansprüche 16 bis 23, dadurch gekennzeichnet, dass die genannten Sendemittel auf einem ERMES-Kanal senden, der von keinem externen ERMES-Personenrufnetzbetreiber im das genannte Inhaus-Personenrufnetz umfassende geografischen Gebiet verwendet wird und der mit dem genannten öffentlichen ERMES-Personenrufnetz synchronisiert ist.

25. Inhaus-Personenrufsystem gemäss einem der Ansprüche 16 bis 24, dadurch gekennzeichnet, dass die genannte Personenrufzentrale (1) über Mittel verfügt um sich mit der UTC Weltzeit zu synchronisieren.

26. Inhaus-Personenrufsystem gemäss einem der Ansprüche 16 bis 25, dadurch gekennzeichnet, dass die genannte Personenrufzentrale (1) programmierte Mittel umfasst mit denen gewisse Funktionen einer ERMES-Personenrufvermittlungszentrale, einer ERMES-Personenrufbereichssteuerung, einer ERMES-I3- und einer ERMES-I2-Schnittstelle sowie Funktionen für eine Teilnehmerverwaltung und eine OMC-Schnittstelle implementiert sind.

27. Inhaus-Personenrufsystem gemäss einem der Ansprüche 16 bis 26, dadurch gekennzeichnet, dass die genannte Personenrufzentrale (1) Speichermittel umfasst, in denen Radio Identity Codes der genannten ERMES-Personenrufempfänger (2, 2') gespeichert sind.
